# EUROPÄISCHE PATENTANMELDUNG

(11) **EP 4 671 718 A1**
(43) Veröffentlichungstag der Anmeldung: **31.12.2025**
(21) Anmeldenummer: 25185772.8
(22) Anmeldetag: 27.06.2025
(51) Int. Cl.: G01L 3/10, B62D 6/10, G01L 5/22

(54) **VORRICHTUNG ZUM BESTIMMEN EINES AUF EINER WELLE EINES LENKSYSTEMS EINES KRAFTFAHRZEUGES AUSGEÜBTEN DREHMOMENTES UND/ODER VERDREHWINKELS SOWIE LENKSYSTEM, KRAFTFAHRZEUG UND BEFESTIGUNGSVERFAHREN**

(30) Priorität: 28.06.2024 DE 102024118450
(71) Anmelder: VOLKSWAGEN AG, 38440 Wolfsburg (DE)
(72) Erfinder: Beier, Clemens, 38102 Braunschweig (DE); Stirner, Dietmar, 38124 Stöckheim (DE); Reulecke, Max, 31246 Ilsede (DE)
(74) Vertreter: Bals & Vogel Patentanwälte PartGmbB

(57) **Zusammenfassung**

Die Erfindung betrifft eine Vorrichtung (100) zum Bestimmen eines auf einer Welle (10) eines Lenksystems (200) eines Kraftfahrzeuges (300) ausgeübten Drehmomentes und/oder Verdrehwinkels. Ferner betrifft die Erfindung ein Lenksystem (200) eines Kraftfahrzeuges (300), aufweisend eine derartige Vorrichtung (100), ein Kraftfahrzeug (300) mit einem derartigen Lenksystem (200) sowie ein Verfahren zum Befestigen einer Sensoreinheit (40) und eines Signalgebers (50) an einer Welle (10) einer derartigen Vorrichtung (100) .

## Beschreibung

Die Erfindung betrifft eine Vorrichtung zum Bestimmen eines auf einer Welle eines Lenksystems eines Kraftfahrzeuges ausgeübten Drehmomentes und/oder Verdrehwinkels gemäß dem Oberbegriff des Anspruchs 1, ein Lenksystem eines Kraftfahrzeuges, ein Kraftfahrzeug sowie ein Verfahren zum Befestigen einer Sensoreinheit und eines Signalgebers an einer Welle einer derartigen Vorrichtung.

Es ist bekannt, Sensoreinheiten und Signalgeber für die Sensoreinheiten, wie Magnetringe, an der Eingangswelle und der Ausgangswelle eines Lenksystems eines Kraftfahrzeuges zu befestigen.

So ist aus der DE 10 2005 018 293 B4 eine Vorrichtung zum Bestimmen eines auf eine Welle ausgeübten Drehmoments bekannt, wobei die Welle einen ersten Wellenabschnitt und einen zweiten Wellenabschnitt aufweist und die beiden Wellenabschnitte gegeneinander verdrehbar sind. An dem ersten Wellenabschnitt ist ein Magnet und an dem zweiten Wellenabschnitt ist eine Sensoreinheit angeordnet. Magnet und Sensoreinheit sind dabei jeweils über Klebeverbindungen mit dem jeweiligen Wellenanschnitt verbunden. Derartige Klebeverbindungen weisen den Nachteil auf, dass diese lange Aushärtezeiten und eine hohe Anfälligkeit für Feuchtigkeit aufweisen. Ferner müssen die Bauteile aufwändig in der Montage gesäubert werden, da Konservierungsmittel die Klebung beeinflusst. Durch die langen Aushärtezeiten ist wiederum die Fertigung derartiger Vorrichtungen langwierig. Ferner kommt es nachteiliger Weise zu Ausdünstungen des Klebers, was zu gesundheitlichen Nachteilen führen kann.

Die DE 101 26 791 A1 offenbart ein Verfahren zur Befestigung einer Drehmoment-Messeinrichtung zur Erfassung eines Relativmomentes zwischen einer Eingangswelle und einer Ausgangswelle eines Lenksystems eines Kraftfahrzeugs, wobei die Drehmoment-Messeinrichtung durch Verformelemente lokal in die Eingangswelle und/oder die Ausgangswelle eingeformt wird. Durch die Verformelemente ist eine zuverlässige, dauerhafte und exakte Verbindung möglich. Eine derartige Verbindung besitzt jedoch den Nachteil, dass äußere Kräfte sowohl auf den Magneten, die Sensoreinheit als auch auf die Wellenabschnitte einwirken, sodass es zu unerwünschten Spannungen in den Bauteilen kommen kann. Diese Spannungen können sowohl die Lebensdauer, als auch die Genauigkeit des Sensors negativ beeinflussen.

Neben Klebeverbindungen und Verformelementen sind weitere Befestigungsarten für die Sensoreinheit und den Magnetring an den Wellenabschnitten der Welle bekannt. Diese weiteren Verbindungstechniken sind Warmaufschmelzen, Längspressverband, Verstiften, Punktschweißen und Verstemmen.

Ein Nachteil des Warmaufschmelzens ist, dass spezielle Geometrien, wie Rändel auf der Welle, erforderlich sind. Ferner ist ein geeigneter Kunststoff mit entsprechender Wandstärke bei der Hülse erforderlich. Das Warmaufschmelzen hat ferner den Nachteil, dass die Welle durch die Wärmeeinwirkung geschwächt wird. Das Warmaufschmelzen der erforderlichen Kunststoffhülsen führt ferner zu Rußbildungen durch den aufgeschmolzenen Kunststoff, was zu gesundheitsschädlichen Beeinträchtigungen führen kann.

Ein Längspressverband hat den Nachteil, dass hohe Genauigkeiten für Welle und Hülse erforderlich sind. Insbesondere sind große Wandstärken für die Hülse notwendig, weshalb die Fertigung einer derartigen Vorrichtung aufwendig und teuer ist.

Nachteil des Verstiftens ist, dass das Bohren und das anschließende Verstiften als zusätzlicher Prozess und durch das zusätzliche Bauteil (Stift) aufwändig und teuer sind. Ferner kommt es beim Bohren und Verstiften zu Verschmutzungen während der Montage. Insbesondere nachteilig ist die Spanbildung beim Bohren in die Bauteile.

Das Verstemmen hat den Nachteil, dass die Umformung durch das Verstemmen zu Verformungen führen kann, die die Sensorgenauigkeit der Sensoreinheit negativ beeinflussen.

Der Prozess des Punktschweißens basiert auf der punktuellen Erhitzung und Verflüssigung zweier aufeinander gepresster Werkstücke durch Anlegen einer starken Spannung. Hierfür werden Hand- oder Roboterschweißzangen benötigt. Diese Zangen bestehen im Wesentlichen aus einem Antrieb, einem Schweißtransformator, einem Krafterzeugungssystem sowie zwei Elektrodenarmen. Es benötigt daher recht große Flächen an den Hülsen der Sensoreinheit und des Magnetrings. Dennoch sind diese Flächen aufgrund der Größe der Schweißzangen schwer zugänglich. Hierdurch wird der Fertigungsprozess verlangsamt und aufgrund der Größe der benötigen Hülsen teuer. Punktschweißverbindungen besitzen ferner den Nachteil, dass aufgrund des Wärmeeintrags in den Magneten, die Sensoreinheit oder die Wellenabschnitte unerwünschte Gefügeänderungen und Bauteilspannungen hervorgerufen werden oder die Sensoreinheit sogar zerstört wird. Ferner müssen die einzelnen Materialien aufeinander abgestimmt sein.

Daher ist es Aufgabe der Erfindung, eine Vorrichtung zum Bestimmen eines auf einer Welle eines Lenksystems eines Kraftfahrzeuges ausgeübten Drehmomentes und/oder Verdrehwinkels und ein Verfahren zum Befestigen einer Sensoreinheit und eines Signalgebers an einer Welle eines Lenksystems eines Kraftfahrzeuges zu schaffen, durch die die zuvor genannten Nachteile behoben werden. Insbesondere sollen eine Vorrichtung zum Bestimmen eines auf einer Welle eines Lenksystems eines Kraftfahrzeuges ausgeübten Drehmomentes und/oder Verdrehwinkels und ein Verfahren zum Befestigen einer Sensoreinheit und eines Signalgebers an einer Welle eines Lenksystems eines Kraftfahrzeuges geschaffen werden, die bzw. das kostengünstig ist und eine hohe Präzision bei der Befestigung der Sensoreinheit und des Signalgebers an einer Welle ermöglicht. Ferner sollen die Wärmebelastung und die Verformung der Bauteile bei der Fertigung geringgehalten werden. Ebenso sollen Emissionswerte geringgehalten werden sowie eine direkte Qualitätskontrolle umgehend bei der Fertigung ermöglicht werden.

Die Aufgabe wird gelöst durch eine Vorrichtung zum Bestimmen eines auf einer Welle eines Lenksystems eines Kraftfahrzeuges ausgeübten Drehmomentes und/oder Verdrehwinkels gemäß Anspruch 1, durch ein Lenksystem eines Kraftfahrzeuges gemäß Anspruch 9, durch ein Kraftfahrzeug gemäß Anspruch 10 sowie durch ein Verfahren zum Befestigen einer Sensoreinheit und eines Signalgebers an einer Welle gemäß Anspruch 11. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Vorrichtung beschrieben sind, selbstverständlich auch im Zusammenhang mit dem erfindungsgemäßen Lenksystem, dem erfindungsgemäßen Fahrzeug und/oder dem erfindungsgemäßen Befestigungsverfahren und jeweils umgekehrt, sodass bezüglich der Offenbarung zu den einzelnen Erfindungsaspekten stets wechselseitig Bezug genommen wird bzw. werden kann.

Gemäß einem ersten Aspekt der Erfindung wird eine Vorrichtung zum Bestimmen eines auf einer Welle eines Lenksystems eines Kraftfahrzeuges ausgeübten Drehmomentes und/oder Verdrehwinkels bereitgestellt. Die Vorrichtung weist die Welle auf, welche einen ersten Wellenabschnitt und einen zweiten Wellenabschnitt aufweist, wobei der erste Wellenabschnitt und der zweite Wellenabschnitt mit einem Torsionsstab miteinander verbunden und gegeneinander verdrehbar sind. An dem ersten Wellenabschnitt ist eine Sensoreinheit angeordnet und an dem zweiten Wellenabschnitt ist ein Signalgeber angeordnet, wobei die Sensoreinheit mittels eines ersten zylindrischen Grundkörpers an dem ersten Wellenabschnitt befestigt ist und der Signalgeber mittels eines zweiten zylindrischen Grundkörpers an dem zweiten Wellenabschnitt befestigt ist. Insbesondere werden die Sensoreinheit und der Signalgeber exakt axial zueinander ausgerichtet, d. h., mit einem definierten Abstand zueinander.

Erfindungsgemäß ist der erste zylindrische Grundkörper mittels wenigstens einer ersten Laserschweißverbindung an dem ersten Wellenabschnitt befestigt und der zweite zylindrische Grundkörper mittels wenigstens einer zweiten Laserschweißverbindung an dem zweiten Wellenabschnitt befestigt.

Die Sensoreinheit ist fest mit dem ersten zylindrischen Grundkörper verbunden und der Signalgeber ist fest mit dem zweiten zylindrischen Grundkörper verbunden. Durch die Laserschweißverbindung der zylindrischen Grundkörper an den jeweiligen Wellenabschnitten, sind die Sensoreinheit und der Signalgeber fest an den jeweiligen Wellenabschnitten fixiert.

Durch den erfindungsgemäßen Einsatz des Laserschweißens an Bauteilen zur Ermittlung von Drehmomenten und Verdrehwinkeln an einer Vorrichtung zum Bestimmen eines auf einer Welle eines Lenksystems eines Kraftfahrzeuges ausgeübten Drehmomentes und/oder Verdrehwinkels, sind eine Vielzahl von Vorteilen erreichbar. So ist zum einen kein Einsatz von zusätzlichen Medien, wie Klebemittel, Flussmittel, oder zusätzlicher Komponenten, wie Zylinderstiften, erforderlich. Die Laserschweißverbindungen ermöglichen eine sehr hohe Präzision der Befestigung der zylindrischen Grundkörper an den jeweiligen Wellenabschnitten, da die Energiezufuhr beim Laserschweißen exakt eingestellt werden kann, sodass dünne, feine Schweißnähte möglich sind. Ferner entstehen beim Laserschweißen nur minimale Wärmeeinflusszonen, wodurch es zu keiner Schwächung der Bauteile, d. h., der zylindrischen Grundkörper, der Sensoreinheit, des Signalgebers und der Wellenabschnitte, kommt, wie beim Warmaufschmelzen oder beim Punktschweißen. Durch die lokale und exakte Wärmeeinwirkung kommt es zu keinen signifikanten Verzügen und zu keiner Beeinflussung der Sensorgenauigkeit der Sensoreinheit.

Ein großer Vorteil der erfindungsgemäßen Laserschweißverbindungen ist es, dass die Fertigung der Vorrichtung sehr schnell erfolgen kann. D. h., die Laserschweißverbindungen zwischen den zylindrischen Grundkörpern und den Wellenabschnitten können mit einer sehr hohen Geschwindigkeit erfolgen. Somit ist ein Fügen innerhalb von Sekunden möglich. Durch den geringen Wärmeeintrag beim Laserschweißvorgang kann die Welle bzw. die Vorrichtung somit direkt in die Folgeprozesse, z. B. die Montage in die Lenkung, übergeben werden. Dies spart Fertigungszeit und Lagerkosten, da direkt das produziert werden kann, was gebraucht wird.

Die Fertigung der Vorrichtung mittels Laserschweißverbindungen erfordert zudem nur eine einzige Laserquelle in der die Laserleistung erstellt wird. Über entsprechende Kabel und Spiegel kann das Laserlicht der Fertigungsstation an exakt die Stelle gebracht werden, wo sie in der Fertigung benötigt wird. Ein aufwendiges Greifen der Wellenabschnitte oder ein kompliziertes Anlegen von Schweißzangen an die entsprechenden zu verbindenden Bauteile ist nicht notwendig.

Die erfindungsgemäße Laserschweißverbindung weist mehrere weitere Vorteile auf. Der Laser ist sehr zuverlässig und man hat wenige Prozessschritte und wenige Fehlerquellen. Dadurch und durch die hohe Qualität und Zuverlässigkeit ergeben sich dann bei großen Stückzahlen Einsparungen. Die erfindungsgemäße Laserschweißverbindung ermöglicht eine hohe Präzision bei der Befestigung der Sensoreinheit und des Signalgebers an einer Welle. Die Wärmebelastung und die Verformung der Bauteile bei der Fertigung können vermieden bzw. sehr geringgehalten werden. Ferner können Emissionswerte geringgehalten werden, da es im Vergleich zu Kleberverbindungen zu keinen Ausdünstungen kommt. Lediglich das Laserlicht, also die Licht-Emissionen, muss durch geeignete Abschirmmaßnahmen verhindert werden. Ebenso kann keine Rußbildung durch aufgeschmolzenen Kunststoff vermieden werden. Auch ist die Montage sehr sauber, da es im Vergleich zum Bohren und Verstiften zu keiner Spanbildung kommt. Es bilden sich auch keine Schweißperlen oder Schweißspritzer, wie bei anderen Schweißverfahren.

Durch den geringen Wärmeeintrag in die Bauteile vom Laserschweißen und die sehr schnelle Verbindung der zylindrischen Grundkörper an die jeweiligen Wellenabschnitte, ist eine direkte Qualitätskontrolle umgehend bei der Fertigung der Vorrichtung möglich, was zu zeitlichen Fertigungsvorteilen führt. D. h., während der Erstellung einer Laserschweißverbindung oder unmittelbar nach Erstellung einer Laserschweißverbindung ist eine automatische Kontrolle der Laserschweißnaht möglich. Die Kontrolle ist möglich, indem das vom Bauteil reflektierte Laserlicht gemessen und ausgewertet wird. Im Vergleich zu Klebeverbindungen müssen somit weniger Bauteile zerstörend geprüft werden, was wiederum zu Kosteneinsparungen führt.

Die Länge, Breite und Tiefe der Schweißnähte können beim Laserschweißen sehr exakt eingestellt werden. Vorzugsweise beträgt die Länge einer Schweißnaht ein Vielfaches der Breite und der Tiefe der Schweißnaht. Insbesondere ist die Länge einer Schweißnaht 3- bis 7-mal so groß, wie die Breite und die Tiefe der Schweißnaht, wobei die Länge einer Schweißnaht nur 7 bis 9 mm, insbesondere ca. 8 mm, betragen kann. D. h., durch diese sehr kleinen Schweißnähte können der Wärmeeintrag und die Verformung der Bauteile sehr geringgehalten werden, bei gleichzeitiger hoher Befestigungswirkung. Eine typische Breite einer Schweißnaht kann bei ca. 0,7mm liegen, bei einem Wurzeleinbrand von ungefähr 0,3mm. Wobei insbesondere auch längere oder kürzere Schweißnahten möglich sind. Es ist denkbar, dass Schweißnähte versetzt zueinander angeordnet sind. Die Wurzeleinbrandtiefe und die Breite der Schweißnähte sind erarbeitete und optimierte Werte. Wird hiervon signifikant abgewichen, führt dies zu einem schlechten, d. h., unsauberen, Schweißergebnis und/oder zu einer Reduzierung der Verbindungsfestigkeit.

Der Signalgeber der Vorrichtung kann ein Fächerblech (Fächerscheibe) oder ein Magnetring sein. Das Fächerblech, die Fächerscheibe oder der Magnetring weisen jeweils einen zylindrischen Grundkörper auf, der formschlüssig auf die entsprechenden Wellenabschnitte der Welle aufbringbar und anschließend an den Wellenabschnitten mittels des Laserschweißverfahrens verbindbar ist.

Gemäß einer vorteilhaften Weiterbildung der Vorrichtung kann bei einer Vorrichtung vorgesehen sein, dass der erste Wellenabschnitt eine Eingangswelle des Lenksystems des Kraftfahrzeuges und der zweite Wellenabschnitt eine Ritzelwelle des Lenksystems des Kraftfahrzeuges ist. Dabei kann die Sensoreinheit auf der Eingangswelle und das Fächerblech auf der Ritzelwelle angeordnet sein. Alternativ dazu kann das Fächerblech auf der Eingangswelle und die Sensoreinheit auf der Ritzelwelle angeordnet sein.

Bevorzugt kann bei einer Vorrichtung vorgesehen sein, dass der erste zylindrische Grundkörper eine erste Hülse, insbesondere eine Tiefziehhülse, ist und dass der zweite zylindrische Grundkörper eine zweite Hülse, insbesondere eine Tiefziehhülse, ist. Die Hülsen sind vorzugsweise aus Metall bzw. einer Metalllegierung hergestellt. Derartige Hülsen weisen eine hohe Festigkeit bei geringer Materialstärke auf. Die geringe Materialstärke derartiger Hülsen ermöglicht ein optimales Befestigen der Hülsen an den Wellenabschnitten der Welle der Vorrichtung mittels der Laserschweißverbindungen. Die insbesondere metallischen Hülsen können in einem Tiefziehprozess kostengünstig und schnell gefertigt werden, bei gleichzeitig hoher Präzision und prozesssicherer Verformung. Derartige Hülsen weisen eine gleichbleibende hohe Qualität mit gleichmäßigen Wandstärken auf, wodurch die aufzubringende Wärmeenergie beim Laserschweißen für alle Laserschweißnähte gleich eingestellt werden kann.

Gemäß einer bevorzugten erfindungsgemäßen Ausführungsform, kann bei einer Vorrichtung vorgesehen sein, dass der erste zylindrische Grundkörper, insbesondere die erste Hülse, einen umlaufenden freien Bereich oder mehrere freie Bereiche aufweist, in welchem/welchen die wenigstens eine erste Laserschweißverbindung ausgebildet ist, und dass der zweite zylindrische Grundkörper, insbesondere die zweite Hülse, einen umlaufenden freien Bereich oder mehrere freie Bereiche aufweist, in welchem/welchen die wenigstens eine zweite Laserschweißverbindung ausgebildet ist. Freie Bereiche sind Flächen an der Außenmantelfläche des ersten zylindrischen Grundkörpers und des zweiten zylindrischen Grundkörpers, in denen keine anderen Bauteile vorhanden sind. Hierdurch sind diese freien Bereiche leicht von dem Laserlicht einer Laserschweißanlage zugänglich. Die Laserschweißverbindung kann aber nicht nur auf den freien Flächen appliziert werden, sondern auch auf der oberen Kante. Dies hat den Vorteil, dass man den zylindrischen Grundkörper (Hülse) kurz ausführen könnte und somit Material und Kosten spart.

Zur leichten Zugänglichkeit der zylindrischen Grundkörper für das Laserlicht der Laserschweißanlage, weisen die zylindrische Grundkörper bzw. die Hülsen der zylindrischen Grundkörper vorzugsweise einen umlaufenden freien Bereich oder mehrere freie Bereiche, die vorzugsweise auf einer umlaufenden virtuellen Bahn angeordnet sind, auf. Die Laserschweißverbindungen der Vorrichtung sind entsprechend entlang des freien Bereichs bzw. der freien Bereiche umlaufend angeordnet. Dies erspart bei der Erstellung der Laserschweißnähte Zeit, da die Wellenabschnitte mit den zylindrischen Grundkörpern der Sensoreinheit und des Signalgebers an der Laserschweißanlage vorbeigedreht werden können zur Erstellung der Laserschweißnähte. Der umlaufende freie Bereich ist vorzugsweise senkrecht zur Längsachse des zylindrischen Grundkörpers und damit zur Längsachse der Wellenabschnitte an den zylindrischen Grundkörpern vorgesehen. Die mehreren freien Bereiche sind ebenfalls rotationssymmetrisch an den zylindrischen Grundkörpern angeordnet. Dies bildet eine große Zeitersparnis bei der Herstellung der Laserschweißnähte.

Es kann vorgesehen sein, dass das Fächerblech mittels eines Längspressverbands auf Position geschoben wird, beispielsweise über einen Anschlag in einer Presse, und die Sensoreinheit auf Position kraftfrei auf die Eingangswelle geschoben wird. Die Position ergibt sich durch ein zweites Anschlagelement in der Montagevorrichtung. D. h., das Fächerblech wird auf den ersten Wellenabschnitt auf eine definierte Position aufgepresst, wobei ein Anschlagelement sich in diesem Fall in der Presse befindet und nicht im Bauteil befindet. Dieser sogenannte "LängsPressverband" ist dabei vorzugsweise so von den Durchmessern ausgeführt, dass die Kraft nicht zu groß, d. h., dass eine Schädigung des Bauteils möglich ist, und nicht zu klein ausgeführt wird, d. h., dass das Bauteil runterrutscht.

Anschließend wird der Sensor 40 über die Eingangswelle 20 geschoben und kommt in der Montagevorrichtung auf einem Absatz kraftfrei zum aufliegen. Hier sind die Durchmesser so entwickelt, dass sich ein möglichst geringer Spalt ergibt.

Ist der Spalt zu klein, kommt es zu Fügekräften die den Sensor beeinflussen oder schädigen können. Ist der Spalt zu groß, kann dies die Laserschweißung negativ beeinflussen. Hier ist das Laserschweißen allerdings deutlich toleranter, als z.B. ein Punktschweißen.

Bei der Durchführung des Schweißens wird die gesamte Vorrichtung 100 in der Anlage gedreht und der Laser ist feststehend. (anders herum wäre theoretisch auch möglich) .

Gemäß einer weiteren bevorzugten erfindungsgemäßen Ausführungsform kann bei einer Vorrichtung vorgesehen sein, dass der erste Wellenabschnitt und/oder der zweite Wellenabschnitt jeweils ein Anschlagelement zum Ausrichten des ersten zylindrischen Grundkörpers und/oder des zweiten zylindrischen Grundkörpers an dem ersten Wellenabschnitt bzw. dem zweiten Wellenabschnitt aufweisen. Die jeweiligen Anschlagelemente dienen dazu, den ersten zylindrischen Grundkörper und damit die Sensoreinheit sowie den zweiten zylindrischen Grundkörper und damit den Signalgeber an den jeweiligen Wellenabschnitten der Welle der Vorrichtung auszurichten. D. h., nach Anschlag der zylindrischen Grundkörper an den jeweiligen Anschlagelementen sind die Sensoreinheit und der Signalgeber in der gewünschten Position an den Wellenabschnitten gehalten. In dieser Position sind die zylindrischen Grundkörper an den jeweiligen Wellenabschnitten mittels der Laserschweißverbindung optimal zueinander ausgerichtet befestigt. Die Anschlagelemente sind derart ausgebildet, dass sie die zylindrischen Grundkörper axial an den jeweiligen Wellenabschnitten halten. Zusätzlich können die Anschlagelemente derart ausgebildet sein, dass sie die zylindrischen Grundkörper auch radial an den jeweiligen Wellenabschnitten ausrichten. Die Anschlagelemente sind vorzugsweise Absätze an den jeweiligen Wellenabschnitten der Welle der Vorrichtung. Die Vorsprünge können Flächen, insbesondere ebene Flächen, aufweisen, die senkrecht zu der Längsachse der jeweiligen Wellenabschnitte verlaufen, sodass entsprechende Gegenanschlagflächen an den zylindrischen Grundkörpern, insbesondere an den Stirnseiten der zylindrischen Grundkörper, zur Begrenzung des axialen Aufschubs der zylindrischen Grundkörper an den jeweiligen Wellenabschnitten anschlagen.

Besonders bevorzugt kann bei einer erfindungsgemäßen Vorrichtung vorgesehen sein, dass mehrere erste Laserschweißverbindungen und mehrere zweite Laserschweißverbindung jeweils als Querschweißnähte ausgebildet sind und dass die Querschweißnähte umlaufend an dem ersten zylindrischen Grundkörper bzw. an dem zweiten zylindrischen Grundkörper angeordnet sind. Derartige Querschweißnähte sorgen für einen besonders guten Halt der zylindrischen Grundkörper und damit der Sensoreinheit und des Signalgebers an den jeweiligen Wellenabschnitten. Die Laserschweißverbindung kann 360° umlaufend aufgebracht sein oder in mehreren Teilabschnitten. Idealer Weise werden diese Abschnitte gleichmäßig auf dem Umfang der Welle verteilt. Bevorzugt können jeweils 3 Schweißnähte appliziert sein. Mehr oder weniger Schweißnähte oder ungleichmäßig verteilte Schweißnähte sind auch möglich. Die Querschweißnähte verlaufen senkrecht zur Rotationsachse der Welle.

Gemäß einer bevorzugten erfindungsgemäßen Ausführungsform kann bei einer Vorrichtung vorgesehen sein, dass benachbarte erste Laserschweißverbindungen gleich weit voneinander beabstandet angeordnet sind und dass benachbarte zweite Laserschweißverbindungen gleich weit voneinander beabstandet angeordnet sind. Hierdurch ist sichergestellt, dass die zylindrischen Grundkörper und damit die Sensoreinheit und der Signalgeber gleichmäßig über den gesamten Umfang der jeweiligen Wellenabschnitte an den jeweiligen Wellenabschnitten befestigt sind.

Gemäß einem zweiten Aspekt der Erfindung wird die Aufgabe durch ein Lenksystem eines Kraftfahrzeuges gelöst, das Lenksystem aufweisend eine Vorrichtung gemäß dem ersten Aspekt der Erfindung. Ein derartiges Lenksystem weist eine hohe Präzision der Befestigung der Sensoreinheit und des Signalgebers an der Welle der Vorrichtung auf. Die Welle, der Signalgeber und die Sensoreinheit ergeben zusammen eine sogenannte "Drehmomentenmesseinheit". Die Drehmomentenmesseinheit ist Teil des Lenksystems. Die Bauteile der Vorrichtung der Drehmomentenmesseinheit d. h., die Wellenabschnitte der Welle, die Sensoreinheit und der Signalgeber sowie die jeweiligen zylindrischen Grundkörper weisen keine bzw. kaum eine Beeinträchtigung aufgrund einer Wärmebelastung und/oder einer Verformung der Bauteile bei der Fertigung mittels der Laserschweißverbindungen auf. Die Emissionswerte, bis auf Lichtemissionen, des Lenksystems des Kraftfahrzeuges sind gering, sodass es zu keinen gesundheitlichen Beeinträchtigungen bei der Fertigung des Lenksystems sowie beim Betrieb des Lenksystems im Fahrzeug kommt. Durch Abschirmmaßnahmen und entsprechende Kapselung können Lichtemissionen des Laserlichts vermieden werden. Die Abschirmmaßnahmen sin deutlich günstiger und wartungsärmer als z. B. eine Absaugung schädlicher Dämpfe.

Gemäß einem dritten Aspekt der Erfindung wird die Aufgabe durch ein Kraftfahrzeug, aufweisend ein Lenksystem gemäß dem zweiten Aspekt der Erfindung gelöst. Wie bereits zuvor beschrieben sind die Emissionswerte des Lenksystems des Kraftfahrzeuges sehr gering, sodass es zu keinen gesundheitlichen Beeinträchtigungen beim Betrieb des Lenksystems im Fahrzeug kommt.

Gemäß einem vierten Aspekt der Erfindung wird die Aufgabe durch Verfahren zum Befestigen einer Sensoreinheit und eines Signalgebers an einer Welle einer Vorrichtung gemäß dem ersten Aspekt der Erfindung gelöst.

Das Verfahren ist dadurch gekennzeichnet, dass die Sensoreinheit mittels eines ersten zylindrischen Grundkörpers an dem ersten Wellenabschnitt befestigt wird, und dass der Signalgeber mittels eines zweiten zylindrischen Grundkörpers an dem zweiten Wellenabschnitt befestigt wird, wobei der erste zylindrische Grundkörper mittels wenigstens einer ersten Laserschweißverbindung an dem ersten Wellenabschnitt befestigt wird und wobei der zweite zylindrische Grundkörper mittels wenigstens einer zweiten Laserschweißverbindung an dem zweiten Wellenabschnitt befestigt wird. Durch die Laserschweißverbindung der zylindrischen Grundkörper an den jeweiligen Wellenabschnitten können die Sensoreinheit und der Signalgeber fest an den jeweiligen Wellenabschnitten fixiert werden.

Die Laserschweißverbindung erfordert keinen Einsatz von zusätzlichen Medien, wie Klebemittel, Flussmittel, oder zusätzlicher Komponenten, wie Zylinderstiften. Die Laserschweißverbindungen werden mit einer sehr hohen Präzision zwischen den zylindrischen Grundkörpern und den jeweiligen Wellenabschnitten eingebracht, da die Energiezufuhr beim Laserschweißen exakt eingestellt werden kann. Es werden dünne, feine Laserschweißnähte erzeugt. Beim Laserschweißen entstehen nur minimale Wärmeeinflusszonen, wodurch es zu keiner Schwächung der Bauteile, d. h., der zylindrischen Grundkörper, der Sensoreinheit, des Signalgebers und der Wellenabschnitte, kommt.

Durch die geringe Verformung der zylindrischen Grundkörper und der Wellenabschnitte kommt es zu keinen Verzügen und zu keiner Beeinflussung der Sensorgenauigkeit der Sensoreinheit und des Signalgebers beim Vorgang des Laserschweißens.

Die Laserschweißverbindungen können sehr schnell erfolgen. Das bedeutet, dass die Fertigung der Vorrichtung ebenfalls sehr schnell erfolgen kann. Somit ist eine Befestigung der Bauteile miteinander innerhalb von Sekunden möglich. Der geringe Wärmeeintrag beim Laserschweißvorgang ermöglicht es, die Welle bzw. die Vorrichtung direkt in die Folgeprozesse, z. B. die Montage in das Lenksystem, zu übergeben. Dies spart Fertigungszeit.

Der erste Wellenabschnitt und der erste zylindrische Grundkörper der Sensoreinheit können an der Laserschweißanlage vorbeigeführt, insbesondere vorbeigedreht werden. Alternativ dazu wäre es auch möglich nur Spiegel oder nur den Laser zu bewegen. Hierdurch können nacheinander die entsprechenden Laserschweißnähte erzeugt werden. Dabei wird über entsprechende Kabel und Spiegel das Laserlicht der Fertigungsstation exakt an die zur Schweißung vorgesehenen Bereiche an den zylindrischen Grundkörpern, insbesondere den Hülsen, gebracht.

So kann bei einem Verfahren vorgesehen sein, dass zunächst der Signalgeber, beispielsweise ein Fächerblech, auf den ersten Wellenabschnitt, z. B. die Ritzelwelle, der Welle mit Kraft auf eine exakte Position geschoben wird. Die Ritzelwelle kann hierfür eine entsprechende Fase aufweisen, sodass das Fächerblech symmetrisch und gleichmäßig auf die Welle aufgepresst werden kann. Die exakte Position kann durch Anschlag des ersten zylindrischen Grundkörpers an ein Anschlagelement des ersten Wellenabschnitts oder alternativ an ein Anschlagelement innerhalb der Montagevorrichtung erfolgen. Anschließend kann die Sensoreinheit kraftfrei auf eine exakte Position an dem zweiten Wellenabschnitt gebracht werden. Beide Bauteile, d. h., Signalgeber und Sensoreinheit, haben somit eine exakte axiale Ausrichtung zueinander und werden in dieser Position mit dem jeweiligen Wellenabschnitt mittels Laserschweißen verschweißt.

Gemäß einer bevorzugten erfindungsgemäßen Ausführungsform kann bei einem Verfahren vorgesehen sein, dass der erste zylindrische Grundkörper mittels mehrerer Querschweißnähte umlaufend an dem ersten zylindrischen Grundkörper angeschweißt wird und dass der zweite zylindrische Grundkörper mittels mehrerer Querschweißnähte umlaufend an dem zweiten zylindrischen Grundkörper angeschweißt wird.

Die zylindrischen Grundkörper bzw. die Hülsen der zylindrischen Grundkörper weisen vorzugsweise einen umlaufenden freien Bereich oder mehrere freie Bereiche, die vorzugsweise auf einer umlaufenden virtuellen Bahn angeordnet sind, auf. Aufgrund der freien Bereiche sind die zylindrischen Grundkörper für das Laserlicht der Laserschweißanlage leicht zugänglich. Durch eine Rotation der Wellenabschnitte und des daran bereits befestigten zylindrischen Grundkörpers des Signalgebers, und ggf. des daran bereits befestigten zylindrischen Grundkörpers der Sensoreinheit, um die Längsachse der Wellenabschnitte, werden die Bauteile an der Laserschweißanlage vorbeigedreht. D- h-, bevorzug ist nur der Signalgeber, das Fächerblech, an dem zweiten Wellenabschnitt befestigt, da dieser aufgepresst wurde. Die Sensoreinheit kann mit Spiel auf dem ersten Wellenabschnitt gefügt sein. Ihre Position auf dem ersten Wellenabschnitt wird durch eine Geometrie auf der Montagevorrichtung sichergestellt, welche die Welle und die Sensoreinheit gemeinsam fixiert und gemeinsam dreht.

In bestimmten Abständen werden dann durch die Laserschweißanlage, d. h., durch das Laserlicht der Laserschweißanlage, nacheinander und versetzt zueinander mehrere Laserschweißnähte zwischen den zylindrischen Grundkörpern bzw. den Hülsen und den entsprechenden Wellenabschnitten erzeugt. Dies erspart bei der Erstellung der Laserschweißnähte Zeit, da die Wellenabschnitte mit den zylindrischen Grundkörpern der Sensoreinheit und des Signalgebers an der Laserschweißanlage vorbeigedreht werden können.

Gemäß einer weiteren bevorzugten Ausführungsform kann bei einem erfindungsgemäßen Verfahren vorgesehen sein, dass vor dem Anschweißen des ersten zylindrischen Grundkörpers der Sensoreinheit an dem ersten Wellenabschnitt, die Sensoreinheit mit dem ersten zylindrischen Grundkörper auf den ersten Wellenabschnitt aufgeschoben wird bis der erste zylindrische Grundkörper zum Ausrichten der Sensoreinheit an dem ersten Wellenabschnitt an einem Anschlagelement einer Montagevorrichtung oder an dem Anschlagelement des ersten Wellenabschnitts anschlägt, und dass in der Anschlagposition der erste zylindrische Grundkörper mittels eines Fügeverfahrens vor dem Anschweißen gehalten wird, und/oder dass vor dem Anschweißen des zweiten zylindrischen Grundkörpers des Signalgebers an dem zweiten Wellenabschnitt, der Signalgeber mit dem zweiten zylindrischen Grundkörper auf den zweiten Wellenabschnitt aufgeschoben wird bis der zweite zylindrische Grundkörper zum Ausrichten des Signalgebers an dem zweiten Wellenabschnitt an einem Anschlagelement einer Montagevorrichtung oder an dem Anschlagelement des zweiten Wellenabschnitts anschlägt, wobei in der Anschlagposition der zweite zylindrische Grundkörper mittels eines Fügeverfahrens vor dem Anschweißen gehalten wird. Ein Anschlagelement auf dem ersten Wellenabschnitt, d. h., der Eingangswelle, ist möglich, aber weniger sinnvoll, da dann der Abstand von Sensoreinheit und Fächerblech nicht mehr so einfach zueinander eingestellt werden kann. Daher wird zum Ausrichten der Sensoreinheit an dem ersten Wellenabschnitt bevorzugt ein Anschlagelement der Montagevorrichtung genutzt.

Hierdurch ist sichergestellt, dass der zylindrische Grundkörper der Sensoreinheit und damit die Sensoreinheit in axialer, und ggf. zusätzlich in radialer, gewünschter Position an dem ersten Wellenabschnitt ausgerichtet wird. Entsprechend werden der zweite zylindrische Grundkörper des Signalgebers und damit der Signalgeber an dem zweiten Wellenabschnitt axial und ggf. auch radial ausgerichtet. In den gewünschten Positionen werden die zylindrischen Grundkörper mittels Fügeverbindungen gehalten. Dies kann vorzugsweise über Spielpassungen oder Presspassungen oder durch beide Passverbindungen erfolgen.

Der erste Wellenabschnitt und der zweite Wellenabschnitt können zunächst mit einem Torsionsstab gegeneinander verdrehbar, axial zueinander ausgerichtet miteinander verbunden werden. Anschließend können die Sensoreinheit und der Signalgeber, d. h., die zylindrischen Grundkörper der Sensoreinheit und des Signalgebers, auf die entsprechenden Wellenabschnitte aufgeschoben werden und in den gewünschten Positionen axial zueinander ausgerichtet und laserverschweißt werden.

Alternativ dazu können die Sensoreinheit und der Signalgeber, d. h., die zylindrischen Grundkörper der Sensoreinheit und des Signalgebers, auf die entsprechenden Wellenabschnitte aufgeschoben werden und in den gewünschten Positionen laserverschweißt werden. Anschließend können die beiden Wellenabschnitte mit einem Torsionsstab gegeneinander verdrehbar, axial zueinander ausgerichtet miteinander verbunden werden.

Vorteile, die ausführlich zu der Vorrichtung gemäß dem ersten Aspekt der Erfindung beschrieben werden, gelten gleichermaßen bei dem Lenksystem gemäß dem zweiten Aspekt der Erfindung, bei dem Fahrzeug gemäß dem dritten Aspekt der Erfindung sowie bei dem Befestigungsverfahren gemäß dem vierten Aspekt der Erfindung und jeweils umgekehrt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen jeweils schematisch:
- Figur 1: in einer Explosionsdarstellung eine Vorrichtung zum Bestimmen eines auf einer Welle eines Lenksystems eines Kraftfahrzeuges ausgeübten Drehmomentes und/oder Verdrehwinkels,
- Figur 2: die zusammengefügte Vorrichtung gemäß Fig. 1 in einer Seitenansicht,
- Figur 3: eine Vorrichtung zum Bestimmen eines auf einer Welle eines Lenksystems eines Kraftfahrzeuges ausgeübten Drehmomentes und/oder Verdrehwinkels in einer Schnittdarstellung,
- Figur 4: eine Vorrichtung zum Bestimmen eines auf einer Welle eines Lenksystems eines Kraftfahrzeuges ausgeübten Drehmomentes und/oder Verdrehwinkels in einer Seitenansicht,
- Figur 5: eine vergrößerte Darstellung des Bereichs A-A der Vorrichtung gemäß Fig. 4,
- Figur 6: eine Ansicht auf eine Laserschweißverbindung eines Signalgebers an einem zweiten Wellenabschnitt,
- Figur 7: einen als Fächerblech ausgebildeten Signalgeber in einer perspektivischen Ansicht,
- Figur 8: eine perspektivische Darstellung auf einen zweiten Wellenabschnitt und einen befestigten Signalgeber,
- Figur 9: eine Draufsicht auf den zweiten Wellenabschnitt und den befestigten Signalgeber gemäß Fig. 7,
- Figur 10: eine perspektivische Darstellung auf einen ersten Wellenabschnitt und eine befestigte Sensoreinheit,
- Figur 11: eine Seitenansicht auf eine Vorrichtung zum Bestimmen eines auf einer Welle eines Lenksystems eines Kraftfahrzeuges ausgeübten Drehmomentes und/oder Verdrehwinkels, und
- Figur 12: eine Seitenansicht auf ein Kraftfahrzeug mit einem erfindungsgemäßen Lenksystem.

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

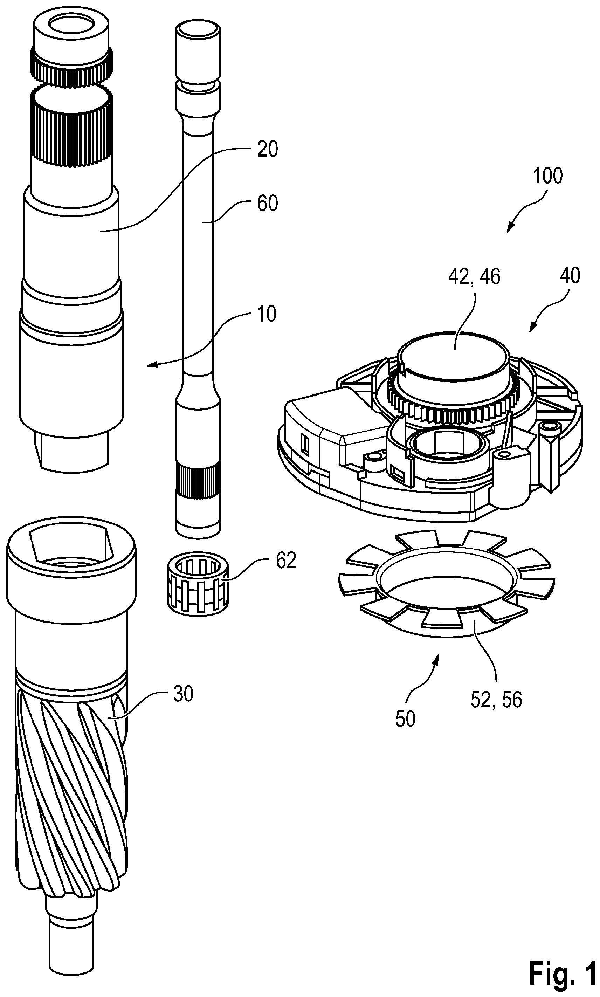

Fig. 1 zeigt schematisch in einer Explosionsdarstellung eine Vorrichtung 100 zum Bestimmen eines auf einer Welle 10 eines Lenksystems 200 eines Kraftfahrzeuges 300 ausgeübten Drehmomentes und/oder Verdrehwinkels. Die Vorrichtung 100 weist die Welle 10 auf, welche einen ersten Wellenabschnitt 20 und einen zweiten Wellenabschnitt 30 aufweist, wobei der erste Wellenabschnitt 20 und der zweite Wellenabschnitt 30 mit einem Torsionsstab 60 miteinander verbunden und gegeneinander verdrehbar angeordnet werden können. Der erste Wellenabschnitt 20, d. h., die Eingangswelle, stützt sich auf dem Torsionsstab 60 ab. Der Torsionsstab 60 befindet sich fest im zweiten Wellenabschnitt 30, d. h., im Lenkritzel. Zur Lagerung des Torsionsstabs 60 innerhalb der Welle 10 ist ein Lager 62, beispielsweise ein Nadellager, vorgesehen. Die Vorrichtung 100 weist eine Sensoreinheit 40 und einen als Fächerblech ausgebildeten Signalgeber 50 auf. Die Sensoreinheit 40 wird an dem ersten Wellenabschnitt 20 befestigt, der Signalgeber 50 wird an dem zweiten Wellenabschnitt 30 befestigt. Zur Befestigung der Sensoreinheit 40 an dem ersten Wellenabschnitt 20 weist die Sensoreinheit 40 einen ersten zylindrischen Grundkörper 42 auf, zur Befestigung des Signalgebers 50, welcher ein Fächerblech, eine Fächerscheibe oder ein Magnetring sein kann, an dem zweiten Wellenabschnitt 30 weist der Signalgeber 50 einen zweiten zylindrischen Grundkörper 52 auf.

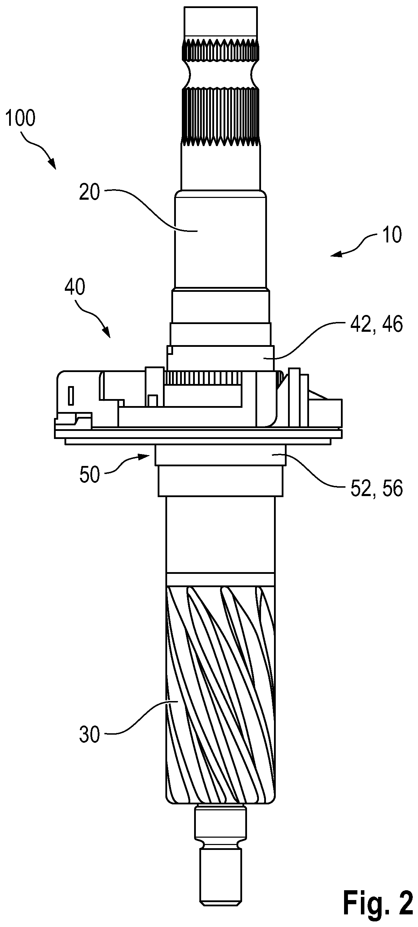

Die Fig. 2 zeigt die zusammengefügte Vorrichtung 100 gemäß Fig. 1 in einer Seitenansicht. Der erste Wellenabschnitt 20 und der zweite Wellenabschnitt 30 sind mittels eines Torsionsstabs 60 miteinander verbunden und gegeneinander verdrehbar. An dem ersten Wellenabschnitt 20 ist die Sensoreinheit 40 angeordnet und an dem zweiten Wellenabschnitt 30 ist der Signalgeber 50 angeordnet, wobei die Sensoreinheit 40 mittels des ersten zylindrischen Grundkörpers 42 an dem ersten Wellenabschnitt 20 befestigt ist und der Signalgeber 50 mittels des zweiten zylindrischen Grundkörpers 52 an dem zweiten Wellenabschnitt 30 befestigt ist. Der erste zylindrische Grundkörper 42 ist mittels wenigstens einer ersten Laserschweißverbindung 44 an dem ersten Wellenabschnitt 20 befestigt und der zweite zylindrische Grundkörper 52 mittels wenigstens einer zweiten Laserschweißverbindung 54 an dem zweiten Wellenabschnitt 30 befestigt.

Durch die Laserschweißverbindungen 44, 54 kann die Fertigung der Vorrichtung 100 sehr schnell erfolgen kann. D. h., die Laserschweißverbindungen 44, 54 zwischen den zylindrischen Grundkörpern 42, 52 und den Wellenabschnitten 20, 30 können mit einer sehr hohen Geschwindigkeit erfolgen. Durch den geringen Wärmeeintrag beim Laserschweißvorgang kann die Welle 10 bzw. die Vorrichtung 100 unmittelbar in Folgeprozesse, z. B. die Montage in die Lenkung, übergeben werden.

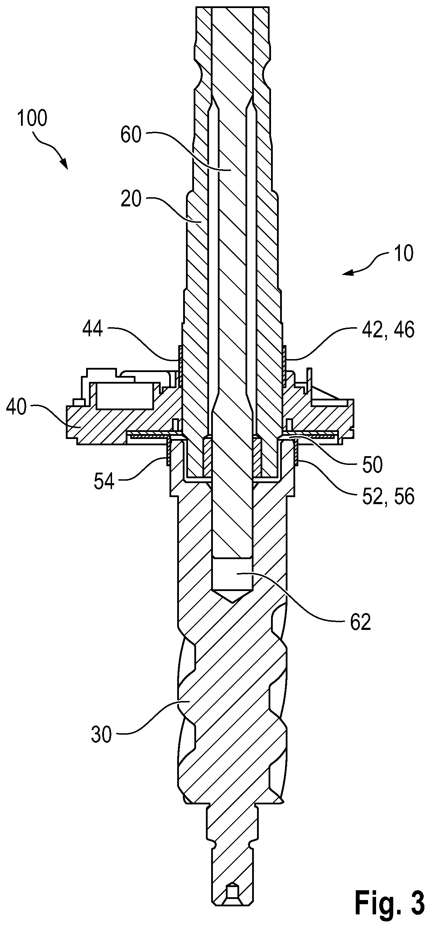

In Fig. 3 ist eine Vorrichtung 100 zum Bestimmen eines auf einer Welle 10 eines Lenksystems 200 eines Kraftfahrzeuges 300 ausgeübten Drehmomentes und/oder Verdrehwinkels in einer Schnittdarstellung dargestellt. Der Torsionsstab 60 verbindet den ersten Wellenabschnitt 20 mit dem zweiten Wellenabschnitt 30. Zur Verdrehbarkeit der Wellenabschnitte 20, 30 ist ein Lager 62 vorgesehen. Der erste Wellenabschnitt 20 und der zweite Wellenabschnitt 30 sind durch den Torsionsstab 60 axial zueinander ausgerichtet. Das Lager 622 stützt den unteren Teil des ersten Wellenabschnitts 20, d. h., der Eingangswelle, auf dem Torsionsstab 60 ab, sodass der Bereich in dem sich die Sensoreinheit 40 befindet nur minimale axiale Bewegungen zulässt. Der Torsionsstab 60 und die Eingangswelle sind im oberen Bereich miteinander durch einen Zylinderstift miteinander befestigt.

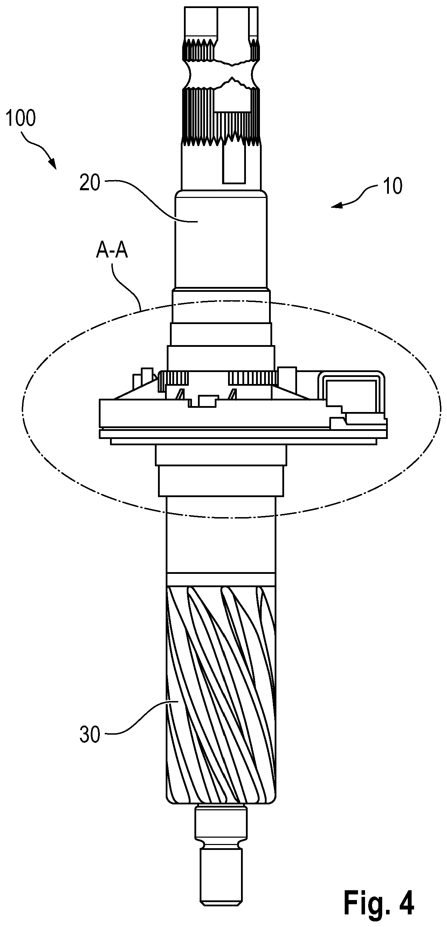

Fig. 4 zeigt eine Vorrichtung 100 zum Bestimmen eines auf einer Welle 10 eines Lenksystems 200 eines Kraftfahrzeuges 300 ausgeübten Drehmomentes und/oder Verdrehwinkels in einer Seitenansicht.

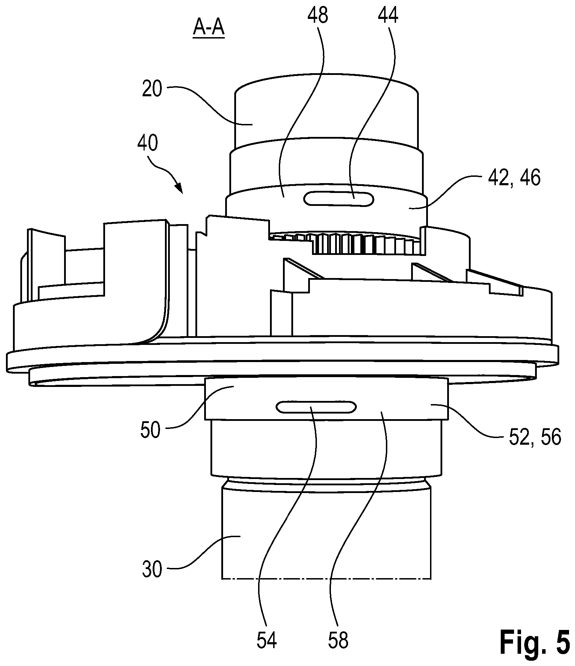

In Fig. 5 ist der Bereich A-A der Fig. 4 vergrößert dargestellt. Die Sensoreinheit 40 ist mittels des ersten zylindrischen Grundkörpers 42 an dem ersten Wellenabschnitt 20 befestigt. Dies erfolgt über die Laserschweißverbindungen 44. Diese sind in einem umlaufenden Bereich 48 des ersten zylindrischen Grundkörpers 42, vorzugsweise gleich weit beabstandet zueinander, eingebracht. Die Laserschweißnähte weisen einen länglichen Verlauf auf, der vorzugsweise senkrecht zu der Längsachse der Welle 10 verläuft.

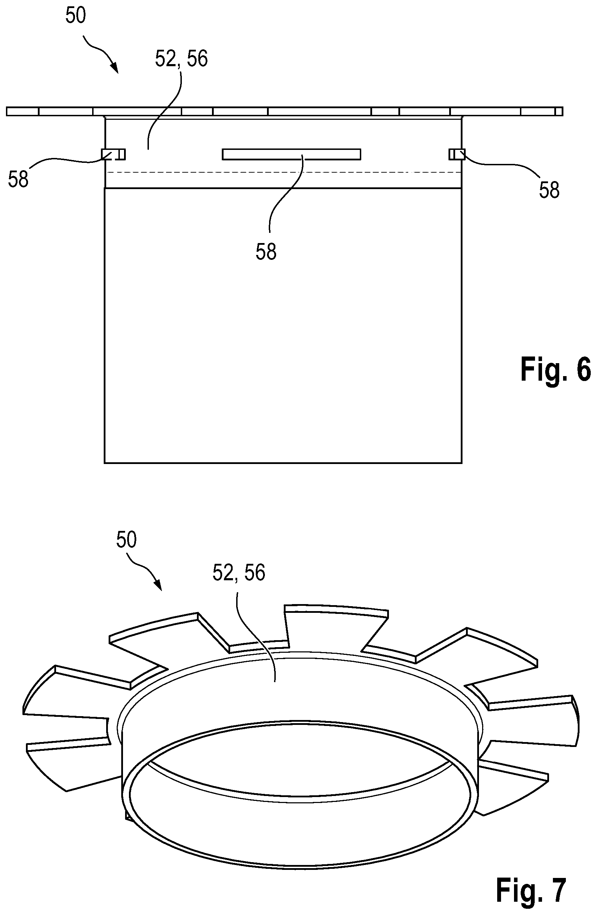

Die Fig. 6 zeigt eine Ansicht auf eine Laserschweißverbindung 54 eines Signalgebers 50 an einem zweiten Wellenabschnitt 30. Die Laserschweißnaht weist einen länglichen Verlauf auf, der vorzugsweise senkrecht zu der Längsachse des zweiten Wellenabschnitts 30 verläuft. Die Laserschweißnaht ist mit ca. 8 mm Länge und ca. 0,7mm Breite sowie einem Wurzeleinbrand von ca. 0,3 mm
klein ausgebildet, wodurch der Wärmeeintrag in die Bauteile geringgehalten werden kann. D. h., die Bauteile der Vorrichtung 100 des Lenksystems 200, nämlich die Wellenabschnitte 20, 30 der Welle 10, die Sensoreinheit 40 und der Signalgeber 50 sowie die jeweiligen zylindrischen Grundkörper 42, 52 weisen keine bzw. kaum eine Beeinträchtigung aufgrund einer Wärmebelastung und/oder einer Verformung der Bauteile bei der Fertigung mittels der Laserschweißverbindungen 44, 54 auf. Die Emissionswerte des Lenksystems 200 des Kraftfahrzeuges 300 sind aufgrund des Weglassens von Klebverbindungen gering, sodass es zu keinen gesundheitlichen Beeinträchtigungen bei der Fertigung des Lenksystems 200 sowie beim Betrieb des Lenksystems 200 im Fahrzeug kommt.

Fig. 7 zeigt schematisch einen als Fächerblech ausgebildeten Signalgeber 50 in einer perspektivischen Ansicht.

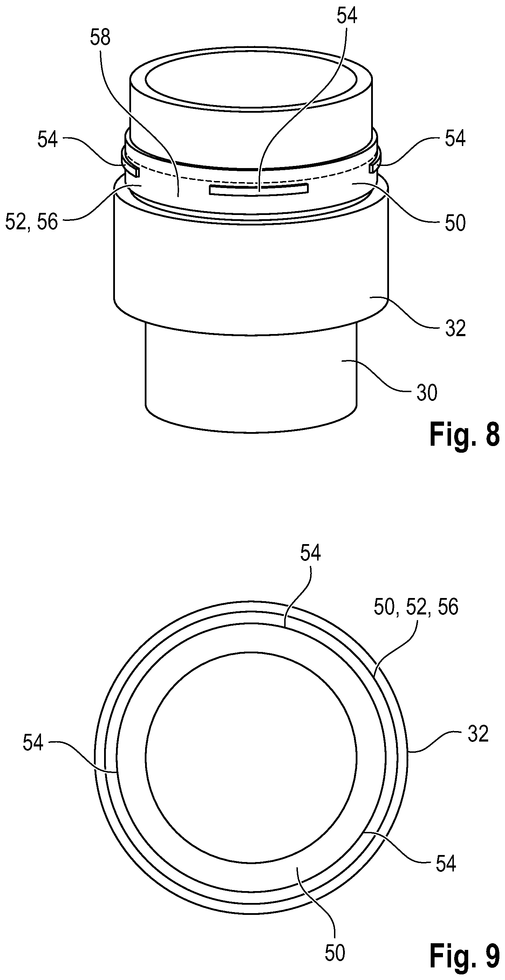

In Fig. 8 ist eine perspektivische Darstellung auf einen zweiten Wellenabschnitt 30 und einen befestigten Signalgeber 50 gezeigt. Der Signalgeber 50 ist auf den zweiten Wellenabschnitt 30 aufgeschoben und schlägt an dem ringförmigen Anschlagelement 32 des zweiten Wellenabschnitts 30 an. Hierdurch ist der Signalgeber 50 axial ausgerichtet an dem zweiten Wellenabschnitt 30. Die Presspassung entsteht nicht erst in der Anschlagposition. Das Anschlagelement 32 führt beim Fügen zu einem starken Kraftanstieg, sodass die Montagepresse detektiert, dass sie die finale Position erreicht hat und abschaltet.

Alternativ kann das Anschlagelement 32 in der Presse bzw. Montagevorrichtung selbst vorgesehen sein. Eine weitere Alternative ist, dass eine Kraft-Weg-Presse verwendet wird. Anschließend wird in dieser Position der als Hülse 56 ausgebildete zweite zylindrische Grundkörper 52 des Signalgebers 50 mittels einer Laserschweißverbindung 54 an dem zweiten Wellenabschnitt 30 fixiert. Der zweite zylindrische Grundkörper 52 weist einen umlaufenden Bereich 58 auf, in welchem mehrere Laserschweißnähte vorhanden sind. Vorzugsweise sind 3 oder 4 Laserschweißnähte beabstandet zueinander in dem umlaufenden Bereich 58 vorgesehen.

Fig. 9 zeigt einen Querschnitt durch den zweiten Wellenabschnitt 30 und den befestigten Signalgeber 50 gemäß Fig. 8.

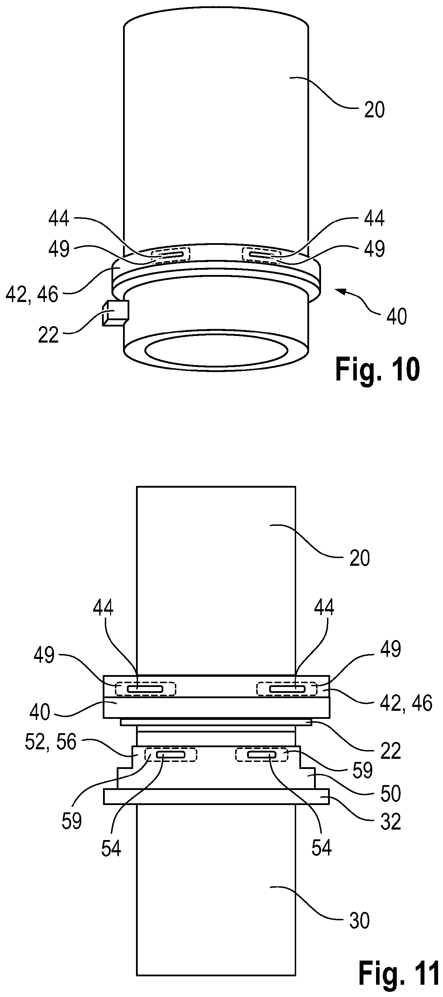

Fig. 10 zeigt eine perspektivische Darstellung auf einen ersten Wellenabschnitt 20 und eine am ersten Wellenabschnitt 20 befestigte Sensoreinheit 40. An dem ersten zylindrischen Grundkörper 42 der Sensoreinheit 40 sind verteilt mehrere Laserschweißverbindungen 44 vorgesehen, mittels deren der erste zylindrische Grundkörper 42 und damit die Sensoreinheit 40 an dem ersten Wellenabschnitt 20 fest fixiert ist. Das Anschlagelement 22 kann bevorzugt als ringförmiger Vorsprung des ersten Wellenabschnitts 20 ausgebildet sein. Besonders bevorzugt weist der erste Wellenabschnitt 20 kein Anschlagelement 22 auf, sondern es wird ein Anschlagelement in der Montagevorrichtung genutzt, um den ersten zylindrischen Grundkörper 42 und damit die Sensoreinheit 40 an dem ersten Wellenabschnitt 20 auszurichten und zu fixieren.

Die Fig.11 zeigt eine Seitenansicht einer Vorrichtung 100 zum Bestimmen eines auf einer Welle 10 eines Lenksystems 200 eines Kraftfahrzeuges 300 ausgeübten Drehmomentes und/oder Verdrehwinkels. An dem ersten Wellenabschnitt 20 ist eine Sensoreinheit 40 über Laserschweißverbindungen 44 befestigt, an dem zweiten Wellenabschnitt 30 ist ein Signalgeber 50 über Laserschweißverbindungen 54 befestigt. Die Anschlagelemente 22, 32 sorgen für einen definierten Abstand der Sensoreinheit 40 zu dem Signalgeber 50. Zur leichten Zugänglichkeit der zylindrischen Grundkörper 42, 52 für das Laserlicht der Laserschweißanlage weisen die zylindrischen Grundkörper 42, 52 bzw. die Hülsen 46, 56 der zylindrischen Grundkörper 42, 52 vorzugsweise einen umlaufenden freien Bereich 48, 58 oder mehrere freie Bereiche 49, 59, die vorzugsweise auf einer umlaufenden virtuellen Bahn angeordnet sind, auf. Die Laserschweißverbindungen 44, 54 der Vorrichtung 100 sind entsprechend entlang des freien Bereichs 48, 58 bzw. der freien Bereiche 49, 59 umlaufend angeordnet. Dies erspart bei der Erstellung der Laserschweißnähte Zeit, da die Wellenabschnitte 20, 30 mit den zylindrischen Grundkörpern 42, 52 der Sensoreinheit 40 und des Signalgebers 50 an der Laserschweißanlage vorbeigedreht werden können zur Erstellung der Laserschweißnähte. Der umlaufende freie Bereich 48, 58 ist bzw. die mehreren freien Bereiche 49, 59 sind vorzugsweise rotationssymmetrisch an den zylindrischen Grundkörpern 42, 52 angeordnet. Hierdurch kann die Herstellung der Laserschweißnähte beschleunigt werden.

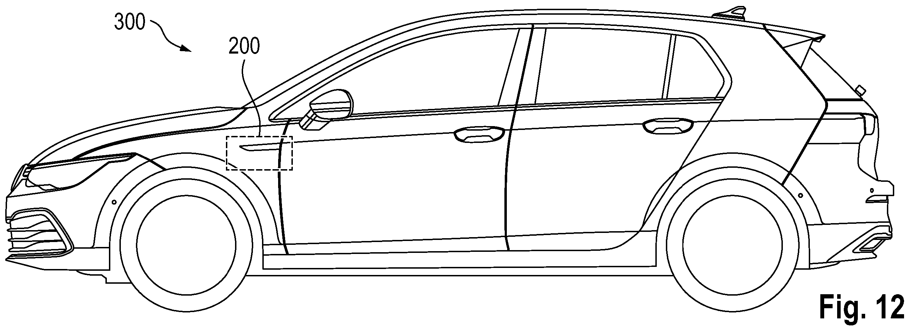

Die Fig. 12 zeigt eine Seitenansicht auf ein Kraftfahrzeug 300 mit einem erfindungsgemäßen Lenksystem 200. Das Lenksystem 200 weist eine Vorrichtung 100 zum Bestimmen eines auf einer Welle 10 eines Lenksystems 200 eines Kraftfahrzeuges 300 ausgeübten Drehmomentes und/oder Verdrehwinkels auf. Im Gegensatz zu den Fig. 1 bis 5 allerdings mit jeweils rotatorischen Anschlagelementen 22, 32 auf dem ersten und dem zweiten Wellenabschnitt 20, 30.

### Bezugszeichenliste

- 10: Welle
- 20: erster Wellenabschnitt
- 22: Anschlagelement

- 30: zweiter Wellenabschnitt
- 32: Anschlagelement

- 40: Sensoreinheit
- 42: erster zylindrischer Grundkörper
- 44: erste Laserschweißverbindung
- 46: erste Hülse
- 48: umlaufender freier Bereich
- 49: mehrere freie Bereiche

- 50: Signalgeber
- 52: zweiter zylindrischer Grundkörper
- 54: zweite Laserschweißverbindung
- 56: zweite Hülse
- 58: umlaufender freier Bereich
- 59: mehrere freie Bereiche

- 60: Torsionsstab
- 62: Lager

- 100: Vorrichtung
- 200: Lenksystem
- 300: Kraftfahrzeug

## Patentansprüche

1. Vorrichtung (100) zum Bestimmen eines auf einer Welle (10) eines Lenksystems (200) eines Kraftfahrzeuges (300) ausgeübten Drehmomentes und/oder Verdrehwinkels, die Vorrichtung (100) aufweisend die Welle (10), welche einen ersten Wellenabschnitt (20) und einen zweiten Wellenabschnitt (30) aufweist, wobei der erste Wellenabschnitt (20) und der zweite Wellenabschnitt (30) mit einem Torsionsstab (60) miteinander verbunden und gegeneinander verdrehbar sind,
wobei an dem ersten Wellenabschnitt (20) eine Sensoreinheit (40) angeordnet ist und an dem zweiten Wellenabschnitt (30) ein Signalgeber (50) angeordnet ist,
wobei die Sensoreinheit (40) mittels eines ersten zylindrischen Grundkörpers (42) an dem ersten Wellenabschnitt (20) befestigt ist,
und der Signalgeber (50) mittels eines zweiten zylindrischen Grundkörpers (52) an dem zweiten Wellenabschnitt (30) befestigt ist,
**dadurch gekennzeichnet,**
**dass** der erste zylindrische Grundkörper (42) mittels wenigstens einer ersten Laserschweißverbindung (44) an dem ersten Wellenabschnitt (20) befestigt ist und der zweite zylindrische Grundkörper (52) mittels wenigstens einer zweiten Laserschweißverbindung (54) an dem zweiten Wellenabschnitt (30) befestigt ist.

2. Vorrichtung (100) nach Anspruch 1,
**dadurch gekennzeichnet,**
**dass** der Signalgeber (50) ein Fächerblech oder ein Magnetring ist.

3. Vorrichtung (100) nach Anspruch 1 oder 2,
**dadurch gekennzeichnet,**
**dass** der erste Wellenabschnitt (20) eine Eingangswelle des Lenksystems (200) des Kraftfahrzeuges (300) und der zweite Wellenabschnitt (30) eine Ritzelwelle des Lenksystems (200) des Kraftfahrzeuges (300) ist.

4. Vorrichtung (100) nach wenigstens einem der vorhergehenden Ansprüche,
**dadurch gekennzeichnet,**
**dass** der erste zylindrische Grundkörper (42) eine erste Hülse (46), insbesondere eine Tiefziehhülse, ist und dass der zweite zylindrische Grundkörper (52) eine zweite Hülse (56), insbesondere eine Tiefziehhülse, ist.

5. Vorrichtung (100) nach wenigstens einem der vorhergehenden Ansprüche,
**dadurch gekennzeichnet,**
**dass** der erste zylindrische Grundkörper (42), insbesondere die erste Hülse (46), einen umlaufenden freien Bereich (48) oder mehrere freie Bereiche (49) aufweist, in welchem/welchen die wenigstens eine erste Laserschweißverbindung (44) ausgebildet ist, und
**dass** der zweite zylindrische Grundkörper (52), insbesondere die zweite Hülse (56), einen umlaufenden freien Bereich (58) oder mehrere freie Bereiche (59) aufweist, in welchem/welchen die wenigstens eine zweite Laserschweißverbindung (54) ausgebildet ist.

6. Vorrichtung (100) nach wenigstens einem der vorhergehenden Ansprüche,
**dadurch gekennzeichnet,**
**dass** der erste Wellenabschnitt (20) und/oder der zweite Wellenabschnitt (30) jeweils ein Anschlagelement (22, 32) zum Ausrichten des ersten zylindrischen Grundkörpers (42) und/oder des zweiten zylindrischen Grundkörpers (52) an dem ersten Wellenabschnitt (20) bzw. dem zweiten Wellenabschnitt (30) aufweisen.

7. Vorrichtung (100) nach wenigstens einem der vorhergehenden Ansprüche,
**dadurch gekennzeichnet,**
**dass** mehrere erste Laserschweißverbindungen (44) und mehrere zweite Laserschweißverbindung (54) jeweils als Querschweißnähte ausgebildet sind und dass die Querschweißnähte umlaufend an dem ersten zylindrischen Grundkörper (42) bzw. an dem zweiten zylindrischen Grundkörper (52) angeordnet sind.

8. Vorrichtung (100) nach Anspruch 7,
**dadurch gekennzeichnet,**
**dass** benachbarte erste Laserschweißverbindungen (44) gleich weit voneinander beabstandet angeordnet sind und dass benachbarte zweite Laserschweißverbindungen (54) gleich weit voneinander beabstandet angeordnet sind.

9. Lenksystem (200) eines Kraftfahrzeuges (300), aufweisend eine Vorrichtung (100) nach wenigstens einem der vorhergehenden Ansprüche.

10. Kraftfahrzeug (300), aufweisend ein Lenksystem (200) nach Anspruch 9.

11. Verfahren zum Befestigen einer Sensoreinheit (40) und eines Signalgebers (50) an einer Welle (10) einer Vorrichtung (100) gemäß einem der Ansprüche 1 bis 8,
**dadurch gekennzeichnet,**
**dass** die Sensoreinheit (40) mittels eines ersten zylindrischen Grundkörpers (42) an dem ersten Wellenabschnitt (20) befestigt wird,
und der Signalgeber (50) mittels eines zweiten zylindrischen Grundkörpers (52) an dem zweiten Wellenabschnitt (30) befestigt wird,
wobei der erste zylindrische Grundkörper (42) mittels wenigstens einer ersten Laserschweißverbindung (44) an dem ersten Wellenabschnitt (20) befestigt wird und wobei der zweite zylindrische Grundkörper (52) mittels wenigstens einer zweiten Laserschweißverbindung (54) an dem zweiten Wellenabschnitt (30) befestigt wird.

12. Verfahren nach Anspruch 11,
**dadurch gekennzeichnet,**
**dass** der erste zylindrische Grundkörper (42) mittels mehrerer Querschweißnähte umlaufend an dem ersten zylindrischen Grundkörper (42) angeschweißt wird und dass der zweite zylindrische Grundkörper (52) mittels mehrerer Querschweißnähte umlaufend an dem zweiten zylindrischen Grundkörper (52) angeschweißt wird.

13. Verfahren nach einem der Ansprüche 11 oder 12,
**dadurch gekennzeichnet,**
**dass** vor dem Anschweißen des ersten zylindrischen Grundkörpers (42) der Sensoreinheit (40) an dem ersten Wellenabschnitt (20), die Sensoreinheit (40) mit dem ersten zylindrischen Grundkörper (42) auf den ersten Wellenabschnitt (20) aufgeschoben wird bis der erste zylindrische Grundkörper (42) zum Ausrichten der Sensoreinheit (40) an dem ersten Wellenabschnitt (20) an einem Anschlagelement einer Montagevorrichtung oder an dem Anschlagelement (22) des ersten Wellenabschnitts (20) anschlägt, und dass in der Anschlagposition der erste zylindrische Grundkörper (42) mittels eines Fügeverfahrens vor dem Anschweißen gehalten wird,
und/oder
**dass** vor dem Anschweißen des zweiten zylindrischen Grundkörpers (52) des Signalgebers (50) an dem zweiten Wellenabschnitt (30), der Signalgeber (50) mit dem zweiten zylindrischen Grundkörper (52) auf den zweiten Wellenabschnitt (30) aufgeschoben wird bis der zweite zylindrische Grundkörper (52) zum Ausrichten des Signalgebers (50) an dem zweiten Wellenabschnitt (30) an einem Anschlagelement einer Montagevorrichtung oder an dem Anschlagelement (32) des zweiten Wellenabschnitts (30) anschlägt, wobei in der Anschlagposition der zweite zylindrische Grundkörper (42) mittels eines Fügeverfahrens vor dem Anschweißen gehalten wird.
